## Europäisches Patentamt
## European Patent Office
## Office européen des brevets

(11) Numéro de publication: **0 190 787**
**B1**

(12) **FASCICULE DE BREVET EUROPÉEN**

(45) Date de publication du fascicule du brevet:
04.10.89

(21) Numéro de dépôt: 86200106.2

(22) Date de dépôt: 24.01.86

(51) Int. Cl.⁴: **B 01 J 8/40,** C 10 J 3/54,
C 10 J 3/56 //
F26B3/08, F27B15/02,
F22B31/00

(54) Installation pour faire réagir des particules solides et un fluide.

(30) Priorité: 05.02.85 BE 214454

(43) Date de publication de la demande:
13.08.86 Bulletin 86/33

(45) Mention de la délivrance du brevet:
04.10.89 Bulletin 89/40

(84) Etats contractants désignés:
AT CH DE FR GB IT LI LU NL SE

(56) Documents cité:
FR-A-2 430 582
FR-A-2 445 367
FR-A-2 503 177
GB-A-929 156
GB-A-2 066 257
GB-A-2 141 043

(73) Titulaire: Bougard, Jacques Léopold, le Beaulieu
44, B-6140 Fontaine- l'Evêque (BE)

(72) Inventeur: Bougard, Jacques Léopold, le Beaulieu
44, B-6140 Fontaine- l'Evêque (BE)

(74) Mandataire: Schmitz, Yvon, Bureau Gevers S.A.
rue de Livourne 7 bte 1, B-1050 Bruxelles (BE)

EP 0 190 787 B1

## Description

La présente invention est relative à une installation mettant en oeuvre un lit vibré impliquant la réaction de particules solides circulant dans une enceinte par gravité et d'au moins un fluide circulant dans ladite enceinte à contre-courant des particules solides.

L'inconvénient principal des réacteurs classiques à lits fixes consiste en ce que le fluide gazeux pénètre difficilement entre les surfaces de contact des particules solides, quelles que soient leurs formes d'ailleurs. Il en résulte des vitesses relatives gaz-solide très variables d'un point à un autre, relativement faibles en moyenne, et de mauvais coefficients d'échange de chaleur et de matières, ce qui entraîne donc des installations volumineuses et coûteuses. De plus, les agglomérations locales de particules par collage ou fusion, entre elles ou sur les parois, ainsi que les différences de distributions granulométriques dans les diverses sections, entraînent des variations de perméabilité des lits, des passages préférentiels du fluide gazeux et même des blocages de charges solides qui rendent tout à fait irrégulières et même impossibles certaines réactions solide-gaz.

L'inconvénient principal des réacteurs à lits fluidisés consiste en ce que les vitesses du fluide gazeux doivent être maintenues dans des limites très étroites, de manière à obtenir une suspension turbulente, homogène et parfaitement mélangée des particules solides dans le fluide gazeux, à éviter le dépôt des particules les plus grosses à la partie inférieure des lits et à limiter l'entraînement des particules les plus fines à la partie supérieure des lits. Pour la plupart des particules solides, les réglages sont critiques, les gammes de modulation de débits ou puissances sont insuffisantes, les pertes de charge et par conséquent les puissances de circulation du fluide gazeux sont très importantes. Certaines particules solides sont même impossibles à fluidiser, parce que leurs dimensions ou poids spécifiques sont trop faibles ou trop élevés ou encore varient dans de larges proportions, leurs formes sont aplaties ou irrégulières, leurs teneurs en eau sont très élevées. On notera, à cet égard, le brevet FR-A-2 430 582 concernant un sécheur à deux chambres superposées en vue de la formation de deux lits fluidisés indépendants. Ce document de brevet décrit en fait une enceinte fermée installée de manière à pouvoir vibrer, une entrée pour des particules solides et une sortie pour un fluide transformé agencées au voisinage du sommet de l'enceinte, une entrée pour un fluide et une sortie pour des particules transformées au voisinage de la base de l'enceinte ainsi que des moyens pour régler l'admission et la sortie des particules solides afin de former un lit de particules dans l'enceinte. Le brevet FR-A-2 445 367 concerne, quant à lui, un gazogène à lit fluidisé dit "tourbillonnaire", dans lequel les particules solides de matières carbonées sont tenues en suspension dans un courant ascendant à base d'oxygène et de vapeur d'eau.

L'invention a pour but de remédier aux inconvénients précités des installations du type à lit fluidisé et de prévoir une installation comprenant une enceinte fermée installée de manière à pouvoir vibrer, une entrée pour des particules solides et une sortie pour un fluide transformé agencées au voisinage du sommet de l'enceinte, une entrée pour un fluide et une sortie pour des particules transformées au voisinage de la base de l'enceinte ainsi que des moyens pour régler l'admission et la sortie des particules solides afin de former un lit de particules dans l'enceinte, dans laquelle l'enceinte est à double paroi, la paroi externe présentant deux ouvertures au voisinage des extrémités de l'enceinte, permettant la circulation d'un second fluide entre les deux parois de l'enceinte et dans laquelle, lorsqu'on utilise des particules combustibles et que celles-ci sont enflammées, le second fluide est de l'eau qui est portée à ébullition par la combustion des particules, l'espace compris entre les deux parois de l'enceinte, au-dessus du niveau d'eau étant raccordé par une tubulure à une rampe de distribution du premier fluide de manière à mélanger, à ce dernier, de la vapeur, ladite installation comprenant en outre des moyens agencés pour soumettre l'enceinte à des vibrations dirigées suivant une direction sensiblement perpendiculaire à la verticale afin d'obtenir un lit vibré.

Suivant une forme de réalisation de l'invention, la rampe de distribution de fluide agencée à proximité de la base de l'enceinte comporte des ajutages régulièrement répartis pour disperser le fluide au sein du lit, ces ajutages étant avantageusement dirigés vers la base de l'enceinte.

Suivant une forme de réalisation particulièrement avantageuse de l'invention, l'enceinte comprend, dans sa partie inférieure, une ouverture obturable agencée de manière à pouvoir enflammer les particules combustibles.

Suivant un mode de réalisation particulièrement avantageux de l'invention, la rampe de distribution de fluide précitée est située dans le premier quart de l'épaisseur du lit en partant de la base de l'enceinte, tandis que l'ouverture susdite est située dans le deuxième quart de ladite épaisseur, en partant de la base de l'enceinte.

Outre les avantages précités, l'installation de l'invention développe de fortes puissances calorifiques dans un volume réduit, présentant des rendements thermiques, calculés sur le pouvoir calorifique inférieur du combustible, dépassant couramment 85 % et assurant en même temps l'épuration des produits de combustion avant leur rejet dans l'atmosphère, cette installation se révélant fort simple, peu coûteuse, extrêmement fiable et très sûre à la construction, en fonctionnement et à l'entretien.

L'installation de l'invention se révèle également particulièrement avantageuse pour la gazéification totale ou partielle d'un combustible solide, pour la combustion totale ou partielle d'un combustible solide avec production simultanée de fluides chauds, tels qu'eau chaude ou vapeur d'eau, pour le chauffage, le séchage, la décomposition thermique, la réduction, la cuisson et le refroidissement des particules solides telles que calcaires, dolomies ou minerais, pour le grillage oxydant et éventuellement désulfurant de minerais concentrés de cuivre, cobalt, plomb ou zinc.

L'installation de l'invention présente encore l'avantage par rapport aux dispositifs antérieurs de procurer une inertie thermique relativement faible, donc des temps de réponse très courts aux variations de charges, ainsi qu'une très large gamme de modulation de puissances calorifiques, pratiquement de 2 à 100 % des valeurs nominales. Outre les avantages précités, l'installation de l'invention permet également d'épurer les gaz combustibles produits ou les produits de combustion avant leur utilisation ou leur rejet à l'atmosphère, par simple addition au combustible solide, de substances capables de fixer des matières nocives, telles que le soufre et les goudrons, comme par exemple des produits neutralisants, tels que des carbonates de calcium, de magnésium, de potassium ou de sodium, mais aussi des produits absorbants, tels que des particules de cendres recyclées ou de chamottes.

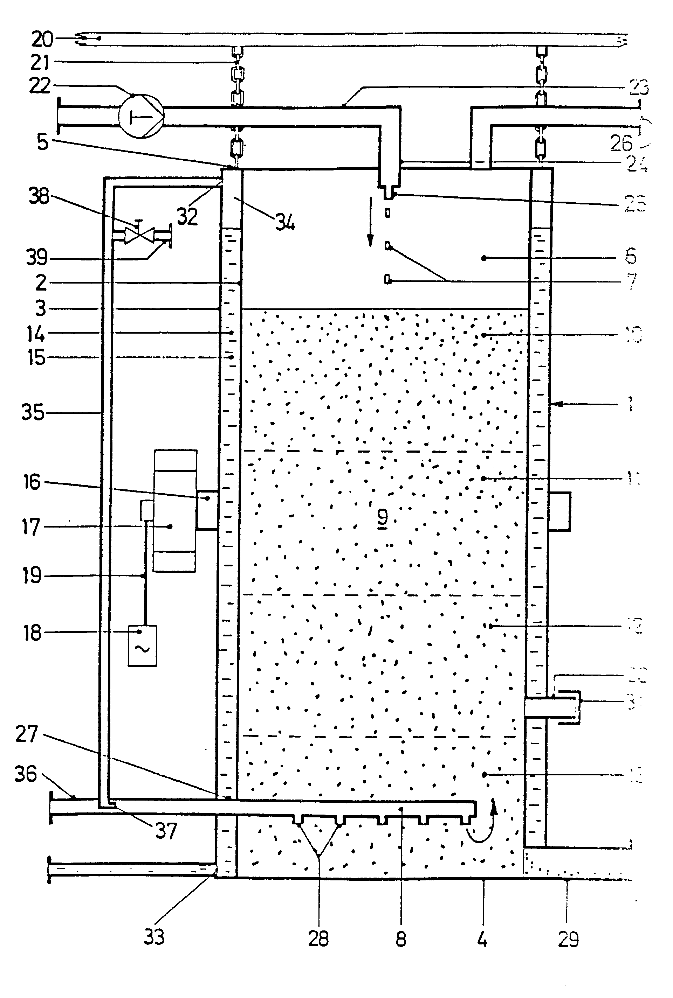

D'autres détails et particularités de l'invention ressortiront de la description du dessin annexé au présent mémoire, qui représente à titre d'exemple non limitatif une forme particulière de l'objet de l'invention.

La figure unique est une figure schématique, en élévation et en coupe, montrant une forme de réalisation de réacteur solide-gaz à lit vibré de l'invention pour la gazéification de combustibles solides.

Le réacteur solide-gaz à lit vibré suivant l'invention, montré à la figure, est destiné à la gazéification de combustibles solides pauvres à forte teneur en cendres, tels que les schistes ou schlamms de lavoirs à charbons, et comprend une enceinte fermée 1 à double paroi 2, 3 installée de manière à pouvoir vibrer, l'espace limité par la paroi intérieure 2, le sommet 5 et la base 4 de l'enceinte constituant un espace primaire 6 ou s'opèrent des échanges directs de chaleur et de matières entre les particules solides 7 en courant descendant, et un fluide primaire gazeux 8, c'est-à-dire un comburant à base d'oxygène et de vapeur d'eau en courant ascendant. Un lit de particules 9 s'établit dans l'espace primaire 6, c'est-à-dire l'espace délimité par la paroi intérieure 2 de l'enceinte 1, sa base 4 et son sommet 5, ce lit de particules 9 se subdivisant en quatre zones d'épaisseurs sensiblement équivalentes, à savoir la zone 10 correspondant au séchage du combustible solide, la zone 11 correspondant à la distillation du combustible solide, la zone 12 correspondant à la combustion de celui-ci et la zone 13 correspondant au refroidissement des cenores. Les parois 2 et 3 de l'enceinte 1 constituent un espace secondaire 14 permettant la circulation d'un second fluide 15, la paroi interne 2 permettant de réaliser des échanges de chaleur indirects entre les particules solides 7 du lit 9 et ce fluide secondaire 15, qui est généralement constitué par de l'eau et qui assure un refroidissement efficace de la paroi 2 tout en produisant de la vapeur d'eau sous basse pression, dont la plus grande partie est utilisée dans l'espace primaire 6 pour la gazéification du combustible et l'excédent est récupéré pour des usages extérieurs, par exemple le préchauffage des combustible et comburant avant introduction à l'intérieur de l'enceinte à double paroi 1.

Une couronne 16 fixée à la paroi extérieure 3 de l'enceinte 1 sensiblement à mi-distance de ses extrémités et un moteur électrique asynchrone triphasé à cage 17, avec balourds réglables à l'arrêt ou en marche, fixé à ladite couronne sont prévus pour soumettre l'enceinte 1 à des vibrations dirigées suivant une direction sensiblement perpendiculaire à la verticale afin d'obtenir un lit vibré. Ce moteur électrique 17, monté avec axe vertical ou sensiblement vertical, est alimenté à partir d'un changeur de fréquence 18 par l'intermédiaire d'un câble flexible 19, de manière à pouvoir régler à distance la fréquence et l'amplitude des vibrations imposées à l'enceinte 1.

Ces moyens agencés pour soumettre l'enceinte 1 à des vibrations dirigées suivant une direction sensiblement perpendiculaire à la verticale permettent en fait d'amplifier les échanges de chaleur et de matières, d'assurer un écoulement régulier des particules de combustible solide 7, par gravité et suivant des couches sensiblement horizontales, sans retour en arrière ni accrochage, de procurer l'homogénéisation des couches horizontales successives et de régler automatiquement et à distance le débit ou le temps de séjour des particules de combustibles solides dans l'enceinte 1.

L'enceinte 1 est suspendue à une charpente 20 par l'intermédiaire de chaînes 21, de préférence au nombre de quatre, accrochées au sommet 5 de ladite enceinte, de façon à limiter l'amplitude des vibrations transmises à la charpente aux valeurs imposées par la réglementation locale.

L'enceinte 1 est pourvue à sa partie supérieure d'une pompe à pistons 22, d'une conduite flexible 23 et d'une tête verticale 24 pourvue d'une tuyère d'extrusion 25 du combustible solide en pâte, sous forme de boudins, qui se cisaillent dès la sortie sous l'effet des vibrations horizontales pour donner des particules (ou cylpebs) 7, ces différents éléments permettant de régler l'admission des particules solides 7 dans l'enceinte 1, ainsi que d'une conduite flexible 26 d'évacuation du gaz combustible produit.

L'enceinte 1 est pourvue à proximité de sa base 4 d'une rampe de distribution 27 de fluide primaire gazeux, c'est-à-dire le comburant à base d'oxygène et de vapeur d'eau, les ajutages 28 de cette rampe de distribution 27 étant régulièrement répartis sur celle-ci pour disperser le fluide primaire 8 au sein du lit 9, ces ajutages étant dirigés vers la base 4 de l'enceinte 1. Cette rampe de distribution 27 est en fait située dans la zone de cendres produites 13, c'est-à-dire dans le premier quart de l'épaisseur du lit 9 en partant de la base 4 de l'enceinte. L'enceinte 1 est également pourvue à sa base 4 d'une conduite 29 d'évacuation par gravité des cendres produites et éventuellement d'un registre (non représenté), permettant de régler la sortie des particules de combustible solides afin de former avec les moyens permettant de régler l'admission des particules, dont question ci-dessus, le lit de particules 9 dans l'enceinte, la pression intérieure de ladite enceinte au niveau de cette conduite 29 étant égale à la pression atmosphérique, de façon à éviter toute fuite ou toute entrée d'air. L'enceinte 1 comprend également, dans sa partie inférieure, et plus particulièrement dans le deuxième quart de l'épaisseur du lit 9, c'est-à-dire dans la zone 12 de combustion du combustible solide, une ouverture obturable 30 de manière à pouvoir enflammer les particules combustibles, cette ouverture étant pourvue d'un bouchon vissé 31.

La mise à feu du gazogène s'effectue d'une manière classique à l'aide d'un lit de bois et d'un chalumeau.

La paroi externe 3 de l'enceinte présente deux ouvertures 32, 33, au voisinage des extrémités de l'enceinte, permettant la circulation du fluide secondaire 15 entre les deux parois 2, 3 de l'enceinte. Lorsque les particules combustibles 7 sont enflammées, le fluide secondaire 15 étant constitué par de l'eau, est porté à ébullition par la combustion des particules et produit de la vapeur. L'espace 34 compris entre les deux parois 2, 3 de l'enceinte, au-dessus du niveau d'eau, est raccordé par une tubulure 35 à la rampe de distribution 27 du premier fluide de manière à mélanger, à ce dernier, la vapeur ainsi produite. La tubulure 35 débouche à l'intérieur du conduit d'alimentation 36 de la rampe de distribution 27, l'extrémité de cette tubulure 35 étant coaxiale au conduit 36 et son orifice 37 étant tourné vers l'enceinte 1. Une vanne 38 est prévue dans la tubulure 35 pour diriger une partie de la vapeur, qui sera utilisée à d'autres fins, vers une autre tubulure de sortie de vapeur 39. Compte tenu de ce qui précède, et ainsi qu'on l'a déjà précisé précédemment, on règle en fait l'admission des particules combustibles solides 7 dans l'enceinte 1 ainsi que la sortie de cette dernière des particules transformées ou cendres afin de constituer dans l'enceinte le lit de particules 9, on règle l'admission du fluide comburant 8 dans l'enceinte pour qu'il traverse au moins une partie importante de l'épaisseur du lit 9, l'épaisseur du lit étant maintenue sensiblement constante, on enflamme les particules au sein du lit, on règle la sortie du fluide combustible produit de l'enceinte et on soumet celle-ci pour obtenir un lit vibré de particules, à des vibrations dirigées suivant une direction sensiblement perpendiculaire à la verticale, le réglage de la fréquence et/ou de l'amplitude des vibrations étant fonction de la nature des particules solides 7.

En fait, ces vibrations continues créent des mouvements alternatifs rapides de translation entre les particules solides elles-mêmes, entre ces particules solides et le fluide primaire gazeux, ainsi qu'entre les particules solides et les parois de l'enceinte, des mouvements saccadés rapides de rotation des particules solides sur elles-mêmes et par rapport au fluide primaire gazeux, des mouvements lents de rotation et d'étalement de l'ensemble des particules solides dans des plans sensiblement perpendiculaires à la verticale et autour de l'axe vertical de l'enceinte, des mouvements lents de translation de l'ensemble des particules solides par gravité des moyens d'entrée 25 vers les moyens de sortie 29 de l'enceinte.

Il en résulte des coefficients d'échange de chaleur et de matière entre les particules solides et le fluide primaire gazeux d'une part, et entre les particules solides et le fluide secondaire à travers la paroi intérieure 2 de l'enceinte d'autre part, qui sont nettement plus élevés que ceux des réacteurs à lits fixes et pratiquement égaux à ceux des réacteurs à lits fluidisés.

Suivant l'invention, on peut utiliser des particules de combustibles solides à pouvoirs calorifiques très élevés, moyens ou très bas, tels qu'anthracites, charbons maigres, charbons gras, charbons flambants, lignites, tourbes, bois, pailles, cokes, schistes et schlamms de laveries à charbons, minerais concentrés de cuivre, cobalt, plomb et zinc, les particules solides provenant de pâte plastique, par exemple des schlamms de charbon à 20 - 25 % d'eau ou des mélanges d'argiles et de charbons pulvérisés pulvérisés convenant particulièrement bien à cet effet. Ces particules de combustibles solides sont gazéifiées en présence du fluide primaire gazeux, composé généralement, ainsi qu'on l'a précisé précédemment, d'oxygène et de vapeur d'eau, pour obtenir à la sortie, d'une part un gaz combustible à base d'oxyde de carbone et d'hydrogène, facile à épurer et d'un prix de revient nettement inférieur à celui du gaz naturel, gaz combustible pouvant être valorisé en chauffe directe de générateurs d'eau chaude, de vapeur et de gaz chauds, en fours de cuisson, de fusion et de traitement, en incinérateurs et en sécheurs, et d'autre part des particules de cendres qui, dans le cas de combustibles à très bas pouvoir calorifique, ont conservé la forme initiale des particules de combustible tout en devenant poreuses et résistantes, et peuvent donc faire l'objet de valorisations très lucratives, par exemple sous forme d'absorbants ou de chamotte, au lieu de la mise en décharge.

Les combustibles solides à teneur en cendres comprise entre 2 et 90 %, à teneur en eau comprise entre 1 et 25 % et à teneur en soufre comprise entre 0 et diminue la température du lit, puisque la réaction de la vapeur d'eau avec le carbone, dite du "gaz à l'eau", est endothermique.

Cette précision de réglage de la température du lit dans la zone de combustion permet notamment d'assurer une cuisson bien régulière des cendres, en évitant les incuits et les surcuits, en évitant le frittage insuffisant, la fusion superficielle, ce qui donne les produits poreux et résistants sus-mentionnés.

Outre les avantages précités, on notera également que le dispositif de la présente invention présente l'avantage par rapport aux dispositifs antérieurs de ne comporter aucun organe mécanique intérieur, tel que réducteurs, chargeurs, disperseurs, bras agitateurs, grilles ou soles tournantes, ni aucun composant travaillant à haute température, tel que revêtement en briques réfractaires ou jupes en acier réfractaire, donc aucune pièce sujette à usure ou détérioration rapide, ce qui réduit les frais d'entretien.

Il doit être entendu que la présente invention n'est en aucune façon limitée aux formes de réalisation ci-dessus et que bien des modifications peuvent y être apportées sans sortir du cadre du présent brevet.

C'est ainsi que toutes les conduites d'entrée et de sortie de matières de l'enceinte 1 sont flexibles, c'est-à-dire qu'elles seront de préférence équipées de compensateurs en caoutchouc ou en métal, conçus pour supporter les déplacements axiaux, latéraux et angulaires, ainsi que pour absorber les vibrations entre les parties fixes et les parties mobiles.

**Revendications**

1. Installation comprenant une enceinte fermée (1) installée de manière à pouvoir vibrer, une entrée pour des particules solides (7) et une sortie pour un fluide transformé agencées au voisinage du sommet (5) de l'enceinte (1), une entrée pour un fluide (8) et une sortie pour des particules transformées au voisinage de la base (4) de l'enceinte (1) ainsi que des moyens pour régler l'admission et la sortie des particules solides (7) afin de former un lit de particules (9) dans l'enceinte (1), caractérisée en ce que l'enceinte (1) est à double paroi (23), la paroi externe (3) présentant deux ouvertures (32, 33) au voisinage des extrémités de l'enceinte, permettant la circulation d'un second fluide entre les deux parois (2, 3) de l'enceinte et qu'on utilise des particules combustibles (7) et que celles-ci sont enflammées, le second fluide (15) est de l'eau qui est portée à ébullition par la combustion des particules, l'espace (34) compris entre les deux parois (2, 3) de l'enceinte (1), au-dessus du niveau d'eau, étant raccordé par une tubulure (35) à une rampe de distribution (27) du premier fluide (8) de manière à mélanger, à ce dernier, de la vapeur, ladite installation comprenant en outre des moyens agencés pour soumettre l'enceinte (1) à des vibrations dirigées suivant une direction sensiblement perpendiculaire à la verticale afin d'obtenir un lit vibré.

2. Installation suivant la revendication 1, caractérisée en ce que la rampe de distribution (27) de fluide agencée à proximité de la base (4) de l'enceinte (1) comporte des ajutages (28) régulièrement répartis pour disperser le fluide (8) au sein du lit (9), ces ajutages (28) étant avantageusement dirigés vers la base (4) de l'enceinte (1).

3. Installation suivant l'une ou l'autre des revendications 1 et 2, caractérisé en ce que l'enceinte (1) comprend, dans sa partie inférieure, une ouverture obturable (30) agencée de manière à pouvoir enflammer les particules combustibles (7).

4. Installation suivant la revendication 3, caractérisée en ce que la rampe de distribution (27) de fluide précitée est située dans le premier quart de l'épaisseur du lit (9) en partant de la base (4) de l'enceinte (1), tandis que l'ouverture susdite (30) est située dans le deuxième quart de ladite épaisseur, en partant de la base (4) de l'enceinte (1).

5. Installation suivant l'une quelconque des revendications 1 à 4, caractérisée en ce que la tubulure (35) débouche à l'intérieur du conduit d'alimentation (36) de la rampe (27), l'extrémité de cette tubulure (35) étant coaxiale au conduit (36) et son orifice (37) étant tourné vers l'enceinte (1).

6. Installation suivant la revendication 5, caractérisée en ce qu'une vanne (38) est prévue dans la tubulure (35) pour diriger une partie de la vapeur qui sera utilisée à d'autres fins, vers une autre tubulure (39).

7. Installation suivant l'une quelconque des revendications 1 à 6, caractérisée en ce que les moyens agencés pour soumettre l'enceinte (1) aux vibrations susdites sont constitués par une couronne externe (16) fixée à l'enceinte sensiblement à mi-distance de ses extrémités et un moteur à balourds (17) fixé à la couronne (16) pour engendrer les vibrations du lit (9) suivant la direction précitée.

8. Installation suivant l'une quelconque des revendications 1 à 7, caractérisée en ce que l'enceinte (1) est suspendue a une charpente (20), notamment par l'intermédiaire de chaînes (21) accrochées au sommet (5) de ladite enceinte.

**Patentansprüche**

1. Anlage mit einem geschlossenen Mantel (1), der so eingerichtet ist, daß er schwingen kann, einem Einlaß für Feststoffpartikel (7) und einem Auslaß für ein umgewandeltes Strömungsmittel, die in der Nähe der Oberseite (5) des Mantels (1) angeordnet sind, einem Einlaß für ein Strömungsmittel (8) und einem Auslaß für umgewandelte Partikel in der Nähe der Unterseite (4) des Mantels (1) sowie Mitteln zum Regulieren des Zu- und Austritts der Feststoffpartikel (7), um ein Partikelbett (9) im Mantel (1) zu bilden, dadurch gekennzeichnet, daß der Mantel (1) doppelwandig (23) ist, wobei die Außenwand (3) zwei Öffnungen (32, 33) in der Nähe der Enden des Mantels aufweist, was den Umlauf eines zweiten Strömungsmittels zwischen den beiden Wänden (2, 3) des Mantels erlaubt, und daß man brennbare Partikel (7) verwendet und daß diese entzündet sind, das zweite Strömungsmittel (15) Wasser ist, das durch die Verbrennung der Partikel zum Sieden gebracht wird, wobei der Zwischenraum (34) zwischen den beiden Wänden (2, 3) des Mantels (1) oberhalb des Wasserspiegels über einen Rohrstutzen (35) an eine Verteilerleitung (27) für das erste Strömungsmittel (8) angeschlossen ist, um Dampf mit diesem zu vermischen, und wobei die Anlage außerdem eine Einrichtung aufweist, die dazu eingerichtet ist, den Mantel (1) Schwingungen zu unterziehen, die in einer zur Vertikalen im wesentlichen senkrechten Richtung ausgerichtet sind, um ein Schwingbett zu erzielen.

2. Anlage nach Anspruch 1, dadurch gekennzeichnet, daß die in der Nähe der Unterseite (4) des Mantels (1) angeordnete Verteilerleitung (27) für Strömungsmittel regelmäßig verteilte Düsen (28) aufweist, um das Strömungsmittel (8) verteilt mitten in das Bett (9) einzuleiten, wobei diese Düsen (28) vorteilhafterweise gegen die Unterseite (4) des Mantels (1) gerichtet sind.

3. Anlage nach dem einen oder dem anderen der Ansprüche 1 und 2, dadurch gekennzeichnet, daß der Mantel (1) in seinem unteren Teil eine verschließbare Öffnung (30) aufweist, die so angeordnet ist, daß man die verbrennbaren Partikel (7) entzünden kann.

4. Anlage nach Anspruch 3, dadurch gekennzeichnet, daß die obengenannte Verteilerleitung (27) für Strömungsmittel im ersten Viertel der Dicke des Bettes (9) liegt, von der Unterseite (4) des Mantels (1) ausgehend, während die obengenannte Öffnung (30) im zweiten Viertel der genannten Dicke liegt, von der Unterseite (4) des Mantels (1) ausgehend.

5. Anlage nach irgendeinem der Ansprüche 1 bis 4, dadurch gekennzeichnet, daß der Rohrstutzen (35) im Inneren der Speiseleitung (36) für die Verteilerleitung (27) mündet, wobei das Ende dieses Rohrstutzens (35) koaxial zur Speiseleitung (36) verläuft und seine Mündung dem Mantel (1) zugewandt ist.

6. Anlage nach Anspruch 5, dadurch gekennzeichnet, daß im Rohrstutzen (35) ein Ventil (38) vorgesehen ist, um einen Teil des Dampfes, der zu anderen Zwecken verwendet wird, einem anderen Rohrstutzen (39) zuzuführen.

7. Anlage nach irgendeinem der Ansprüche 1 bis 6, dadurch gekennzeichnet, daß die obengenannte Einrichtung, um den Mantel (1) Schwingungen zu unterziehen, von einem Außenring (16) gebildet ist, der am Mantel etwa in der Mitte zwischen seinen Enden befestigt ist, und einem Unwuchtmotor (17), der am Ring (16) befestigt ist, um die Schwingungen des Betts (9) in der obengenannten Richtung zu erzeugen.

8. Anlage nach irgendeinem der Ansprüche 1 bis 7, dadurch gekennzeichnet, daß der Mantel (1) an einem Tragegerüst (20) insbesondere mittels Ketten (21) aufgehängt ist, die an der Oberseite (5) des genannten Mantels angehängt sind.

## Claims

1. An installation comprising: a vibratable sealed enclosure (1); an entry for solid particles (7) and an outlet for a processed fluid, the entry and outlet being contrived near the top (5) of the enclosure (1); an entry (8) for a fluid (8); and an outlet for processed particles near the base (4) of the enclosure (1); and means for controlling the entry and exit of the solid particles (7) in order to form a particle bed (9) in the enclosure (1), characterised in that the enclosure (1) is double-walled (23), the outer wall (3) being formed with two openings (32, 33) near the closure ends, the latter openings facilitating the flow of a second fluid between the two walls (2, 3) of the enclosure, combustible particles (7) are used and are ignited, the second fluid (15) is water heated to boiling point by combustion of the particles, the space (34) between the two walls (2, 3) of the enclosure (1) above the water level being connected by a tube (35) to a distribution ramp (27) for the first fluid (8) so as to mix steam therewith, the installation also comprising means adapted to vibrate the enclosure (1) in a direction substantially perpendicular to the vertical in order to produce a vibrating bed.

2. An installation according to claim 1, characterised in that the fluid distribution ramp (27) near the enclosure base (4) has regularly distributed nozzles (28) for dispersing the fluid (8) in the bed (9), the nozzles (28) extending with advantage towards the enclosure base (4).

3. An installation according to one or other of claims 1 and 2, characterised in that the enclosure (1) is formed in its bottom part with a closable opening (30) adapted for igniting the combustible particles (7).

4. An installation according to claim 3, characterised in that the distribution ramp (27) is disposed in the first quarter of the thickness of the bed (9) as considered from the enclosure base (4) whereas the opening (30) is disposed in the second quarter of such thickness as considered from the enclosure base (4).

5. An installation according to any of claims 1 - 4, characterised in that the tube (35) opens into the feed duct (36) of the ramp (27), the end of the tube (35) being coaxial with the duct (36) while its orifice (37) is near the enclosure (1).

6. An installation according to claim 5, characterised in that a valve (38) is disposed in the tube (35) to direct to another tube (39) a proportion of the steam to be used for other purposes.

7. An installation according to any of claims 1 - 6, characterised in that the means for vibrating the enclosure (1) take the form of an outer rim (16) secured to the enclosure (1) substantially midway between its ends and an out-of-balance motor (17) secured to the rim (16) to vibrate the bed (9) in the said direction.

8. An installation according to any of claims 1 - 7, characterised in that the enclosure (1) is suspended on a framework (20) <u>inter alia</u> through the agency of chains (21) secured to the top (5) of the enclosure (1).